# EUROPÄISCHE PATENTANMELDUNG

(11) **EP 1 083 713 A1**
(43) Veröffentlichungstag der Anmeldung: **14.03.2001**
(21) Anmeldenummer: 99117831.0
(22) Anmeldetag: 09.09.1999
(51) Int. Cl.: H04L 12/58, H04M 3/48

(54) **Informationsabfrage bei einem Server**

(71) Anmelder: SIEMENS AKTIENGESELLSCHAFT, 80333 München (DE)
(72) Erfinder: Hafner, Karlheinz, 81739 München (DE); Watzke, Jörn, 81377 München (DE); Tröster, Ansgar, 81543 München (DE)

(57) **Zusammenfassung**

Die Erfindung betrifft ein Verfahren zur Übertragung asynchroner Informationen von einem Server zu einer über ein Teilnehmernetz verbundenen Zugriffseinrichtung, bei dem eine Verbindung zu dem Server zur Durchführung der Übertragung nur dann geschaltet wird, wenn ein durch die Informationen bestimmtes Abfragekriterium erfüllt ist.

## Beschreibung

Die Erfindung betrifft ein Verfahren zur Abfrage asynchroner Informationen bei einem Server, der über ein Teilnehmernetz mit einer Zugriffseinheit verbunden ist.

Die Erfindung geht aus von einem drahtgebundenen oder drahtlosen Kommunikationsnetz, über das Teilnehmer untereinander und mit weiteren Daten- und Kommunikationsnetzen in Verbindung stehen. Solch ein Daten- und Kommunikationsnetz ist beispielsweise das Internet, das über Zugangsrechner für die Kommunikationsteilnehmer erreichbar ist. Ein solcher Zugangsrechner ist beispielsweise ein Server, der von einem Provider zur Verfügung gestellt wird. Ein solcher Server kann auch von einem Netzbetreiber zur Verfügung gestellt werden, wobei beispielsweise durch diesen Server der Zugang zu einem Mobilfunknetz ermöglicht wird.

Vom Benutzer beziehungsweise Kunden werden an diesen Netzen herkömmliche Kommunikationsendgeräte, wie Telefone oder Faxgeräte, sowie Personalcomputer oder allgemein spezielle Zugriffseinrichtungen für die verbale und nichtverbale Kommunikation beziehungsweise Datenkommunikation betrieben. Ein solcher Personalcomputer ist beispielsweise über ein Modem, eine ISDN-Schnittstelle usw. mit dem Internet verbindbar. Vom Personalcomputer werden beispielsweise E-Mails an andere Kommunikationsteilnehmer verschickt. Der Zugang zu diesen Daten beziehungsweise Kommunikationsnetzen wird meist durch Einwahlverbindungen realisiert. Dabei initiiert ein sogenanntes Clientsystem, welches beim Benutzer beispielsweise auf dem Personalcomputer abläuft, den Verbindungsaufbau zum Eingangs erwähnten Server. Das Clientsystem fragt beim Server nach Informationen, beispielsweise nach den E-Mails. Für die Verbindungszeit muß der Benutzer die Verbindungsentgelte und Online-Gebühren an die Betreiber der Server entrichten. Beim Server laufen die Informationen asynchron auf.

Folgende Mechanismen sind zur Abfrage beziehungsweise Signalisierung von Nachrichten bekannt:
- Ein Kommunikationsteilnehmer frägt kostenpflichtig die Existenz von Nachrichten, beispielsweise von E-Mails ab. Dies geschieht beispielsweise durch das sogenannte Polling. Dabei sind Verbindungsentgelte zu zahlen, auch wenn an diesen Kommunikationsteilnehmer keine Nachrichten adressiert sind.
- Die Existenz von Nachrichten kann durch die Implementierung von entsprechenden Leistungsmerkmalen in den Netzen beziehungsweise bei den Netzbetreibern signalisiert werden. Dies erfordert Investitionen im Netz und weiters sind spezielle Endgeräte erforderlich. Die Verwendung freier Datenformate ist eingeschränkt. Der adressierte Kommunikationsteilnehmer erhält ausschließlich eine Signalisierung, gegebenenfalls mit Absender oder Betreff.
- In den GSM-Mobilfunknetzen ist eine Nachrichtenübermittlung auf dem Signalisierungskanal mit entsprechenden Tarifierungsmodellen gegeben. Die Hierbei verwendeten sogenannten Kurznachrichten werden dabei kostenpflichtig für den Empfänger übermittelt.
- Einige Anrufbeantworter signalisieren bei der Fernabfrage die Existenz neuer Nachrichten durch kürzere Reaktionszeiten. Der Anrufbeantworter wird beispielsweise bei einem eingehenden Ruf nach sechs Klingelzeichen eingeschaltet. Beim Vorliegen von Nachrichten meldet sich der Anrufbeantworter beispielsweise schon nach vier Klingelzeichen. Der abfragende Teilnehmer kann somit die Verbindung, d.h. den Verbindungsaufbau, nach vier Klingelzeichen abbrechen, so daß für ihn keine Gebühren anfallen.
- Einige neuere Telefone werten die Rufnummer des rufenden Teilnehmers, (Caller-ID) aus, und ordnen sie beispielsweise unterschiedlichen Telefonbüchern zu. Der eingehende Ruf wird beispielsweise mit dem Namen beziehungsweise Eintrag aus einem privaten oder geschäftlichen Telefonbuch in eine Anruferliste eingetragen.

Der Erfindung liegt die Aufgabe zugrunde ein Verfahren anzugeben, welches eine kostengünstige, zeitnahe Abfrage beziehungsweise Übertragung asynchroner Informationen ermöglicht.

Diese Aufgabe wird erfindungsgemäß durch die im Patentanspruch 1 angegebenen Merkmale gelöst.

In den abhängigen Ansprüchen 2 und 3 sind die Merkmale von zwei Ausgestaltungen der Erfindung angegeben.

Durch das erfindungsgemäße Verfahren können Verbindungsgebühren immer in den Fällen eingespart werden, wenn keine Nachrichten, oder zumindest keine neuen Nachrichten auf dem Server abholbereit sind.

Im folgenden wird die Erfindung anhand eines in der Zeichnung dargestellten Ausführungsbeispieles beschrieben. Dabei zeigen:
Figur 1 ein Szenario, wobei die Anfrage von einem Teilnehmer des Kommunikationsnetzes ausgeht, und
Figuren 2 und 3 bei dem von einem Server eine Meldung an den Kommunikationsteilnehmer gegeben wird.

Der Erfindung liegt grundsätzlich die Idee zugrunde, daß eine kostenpflichtige Verbindung zwischen einem Kommunikationsteilnehmer und dem Server nur dann zustande kommt, wenn für diesen Kommunikationsteilnehmer eine Information auf dem Server vorliegt.

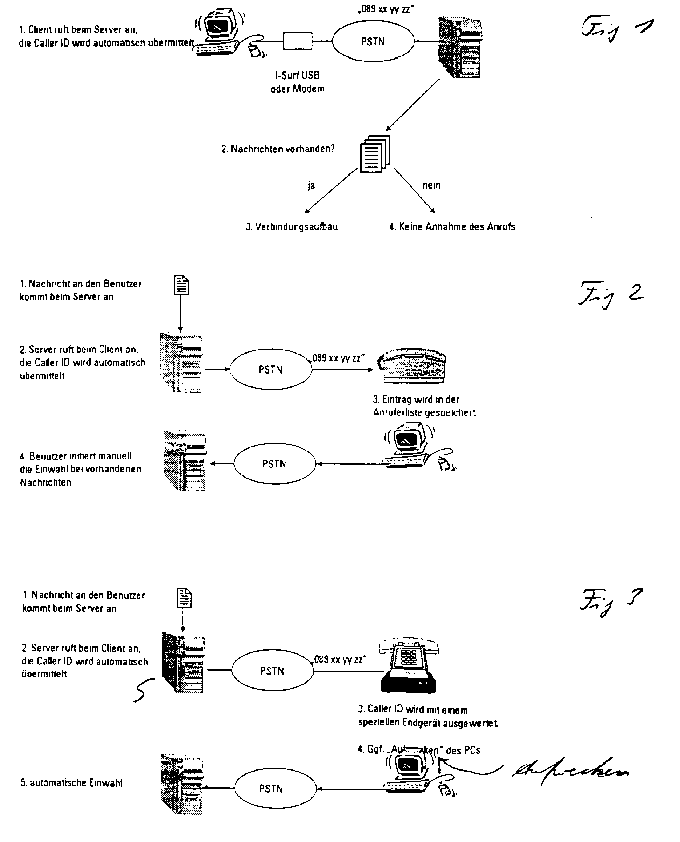

Eine erste ausgestaltende Variante der Erfindung ist in Figur 1 dargestellt. Ein Abfrageprogramm am Personalcomputer des Kommunikationsteilnehmers, ein sogenannter Client, pollt nach Informationen. Hierzu wird vom Personalcomputer aus eine bestimmte Rufnummer des Servers oder eines Netzbetreibers angewählt. Die Rufnummer des rufenden Teilnehmers wird dabei mit übertragen.

Der Server wertet diese Rufnummer aus, und stellt die Verbindung nur her, wenn für diesen Kommunikationsteilnehmer beispielsweise neue Nachrichten vorhanden sind. Jeder Teilnehmer eines beliebigen Datennetzes wird durch seine Telefonnummer identifiziert. Diese muß unter Umständen explizit freigeschaltet werden, was derzeit kostenlos bei allen Anbietern in Deutschland möglich ist, beispielsweise über die sogenannten T-Net-Features. Alternative Adressierungsarten, beispielsweise E-Mail-Adressen, werden von einem speziellen Server auf die Telefonnummer umgesetzt.

Für die sogenannten Push-Dienste oder die Nachrichtenabfrage steht eine besondere Einwahlnummer beim Serviceprovider zur Verfügung. Die normalen Pull-Dienste, beispielsweise das Internet, werden vom Client über eine andere Telefonnummer abgefragt.

Wenn beim Server Nachrichten beziehungsweise neue Nachrichten für den anrufenden Teilnehmer vorliegen, wird die Verbindung hergestellt. Nach erfolgtem Verbindungsaufbau frägt der Client die gewünschten Informationen, mit dienstespezifischen, durch diese Erfindung nicht eingeschränkten Datenaustauschprotokollen ab. Solche Protokolle sind beispielsweise das X.75, HTLC, PPP, TCP/IP oder POP3.

Eine weitere ausgestaltende Variante der Erfindung ist in Figur 2 dargestellt. Hierbei signalisiert der Server dem adressierten Kommunikationsteilnehmer das Vorliegen von Informationen. Dem Client am Personalcomputers des Benutzers ist hierbei eine spezielle Telefonnummer zugeordnet. Der Client empfängt einen Ruf vom Server, ohne eine Verbindung zustande kommen zu lassen.

Bei einer ersten Untervariante der Erfindung (Figur 2) ist dieser Telefonnummer im Telefonbuch ein aussagekräftiger Eintrag zugeordnet, beispielsweise "Nachricht liegt vor". Diese Meldung wird in der Anruferliste angezeigt, so daß der Benutzer die Verbindung manuell aufbauen und die Informationen abfragen kann.

Bei einer zweiten, in Figur 3 dargestellten Möglichkeit, wird die Telefonnummer von einem speziellen Endgerät oder einem entsprechend programmierten Modem automatisch ausgewertet. Danach wird gegebenenfalls ein im Standby-Modus befindlicher Personalcomputer aufgeweckt. Danach stellt der Client auf dem Personal-Computer selbst die Verbindung zum Server her, und holt die Nachrichten ab. Diese Abfrage beziehungsweise Übertragung kann konfigurierbar nach den Präferenzen des Benutzers, beispielsweise der Häufigkeit, eingestellt werden.

## Patentansprüche

1. Verfahren zur Übertragung asynchroner Informationen von einem Server zu einer über ein Teilnehmernetz verbundenen Zugriffseinrichtung,
bei dem eine Verbindung zu dem Server zur Durchführung der Übertragung nur dann geschaltet wird, wenn ein durch die Informationen bestimmtes Abfragekriterium erfüllt ist.

2. Verfahren nach Anspruch 1,
bei dem die Zugriffseinrichtung einen Verbindungsaufbau zum Server signalisiert, der Server die zur Zugriffseinrichtung gehörende und mitsignalisierte Rufnummer auswertet, und bei Vorliegen eines durch die Information bestimmten Abfragekriteriums die Verbindung herstellt, und
bei dem andernfalls die Verbindung nicht geschaltet wird.

3. Verfahren nach Anspruch 1,
bei dem der Server zur Übertragung der Informationen einen Verbindungsaufbau zur Zugriffseinrichtung mit einer dort bekannten Rufnummer signalisiert, und
in der Zugriffseinrichtung dieser Rufnummer ein Eintrag in einem Telefonbuch zugeordnet ist, der daraufhin ausgegeben wird, so daß ausgehend von der Zugriffseinrichtung die Verbindung zur Übertragung signalisiert und geschaltet werden kann.
